# EUROPEAN PATENT APPLICATION

(11) **EP 2 980 629 A1**
(43) Date of publication of application: **03.02.2016**
(21) Application number: 15178286.9
(22) Date of filing: 24.07.2015
(51) Int. Cl.: G02C 1/00, G02C 5/00, G02C 5/14, G02C 5/22

(54) **EYEGLASSES WITH BUILT-IN LENSES AND METHOD FOR MANUFACTURING SUCH EYEGLASSES**

(30) Priority: 31.07.2014 IT PD20140203
(71) Applicant: Silcon Plastic S.R.L., 32012 Forno di Zoldo (BL) (IT)
(72) Inventor: COSTANTIN, Arcangelo, 32012 FORNO DI ZOLDO BL (IT); BATTISTIN, Pietro, 32012 FORNO DI ZOLDO, FRAZIONE DONT BL (IT)
(74) Representative: Modiano, Micaela Nadia

(57) **Abstract**

Eyeglasses with built-in lenses (10), comprising a frame (11) with temples (12, 13) and lenses (14, 15), the frame (11), the temples (12, 13) and the lenses (14, 15) being constituted by a single body (16) made of elastically deformable plastic material.

## Description

The present invention relates to eyeglasses with built-in lenses, as well as a method for manufacturing such eyeglasses.

Nowadays the need is increasingly felt in the eyewear sector to offer purchasers a product that not only is aesthetically appreciable, but which can also be easily folded to a minimal space occupation and can be conveniently carried in a pocket or in a bag.

The eyeglasses known today usually comprise a rigid frame, in three pieces or in a single piece, with hinged temples that can be rotated toward the lenses.

The lenses are also rigid, as a consequence, for such conventional eyeglasses the only reduction in space occupation that can be obtained is constituted by the rotation of the temples from the configuration for use, in which they are substantially at right angles to the arrangement of the lenses, to the configuration of minimal space occupation, with the temples folded against the lenses.

Similarly, the temples are also rigid and cannot be deformed in order to reduce their encumbrances.

The aim of the present invention is to provide eyeglasses with built-in lenses which are capable of overcoming the limitations of conventional eyeglasses.

Within this aim, an object of the invention is to provide eyeglasses that can be easily folded to a much smaller space occupation than that obtainable with conventional eyeglasses.

Another object of the invention is to provide eyeglasses that can be conveniently carried in pockets, including small pockets, and which are always ready for use.

Another object of the invention is to provide eyeglasses that are simple and intuitive to use.

Another object of the invention is to provide eyeglasses that can be manufactured in various different shapes and colors according to the tastes and requirements of the maker.

Another object of the invention is to provide a method for manufacturing such eyeglasses according to the invention.

This aim and these and other objects which will become better apparent hereinafter are achieved by eyeglasses with built-in lenses, comprising a frame with temples and lenses, characterized in that said frame, said temples and said lenses are constituted by a single body made of elastically deformable plastic material.

Further characteristics and advantages of the invention will become better apparent from the description of a preferred, but not exclusive, embodiment of the eyeglasses according to the invention, which is illustrated by way of non-limiting example in the accompanying drawings wherein:
- Figure 1 is a perspective view of eyeglasses according to the invention;
- Figure 2 is an exploded perspective view of a detail of the eyeglasses according to the invention;
- Figure 3 is a perspective view of the eyeglasses according to the invention in an assembly step,
- Figure 4 is a perspective view of the eyeglasses according to the invention in a further assembly step;
- Figure 5 is a perspective view of the eyeglasses according to the invention after assembly and ready for use;
- Figure 6 is a perspective view of the eyeglasses according to the invention, in use.

With reference to the figures, eyeglasses with built-in lenses according to the invention are designated overall with the reference numeral 10.

The eyeglasses 10 comprise a frame 11 with temples 12 and 13 and lenses 14 and 15.

The peculiarity of the invention consists in that the frame 11, the temples 12 and 13 and the lenses 14 and 15 are constituted by a single body 16 which is made of elastically deformable plastic material.

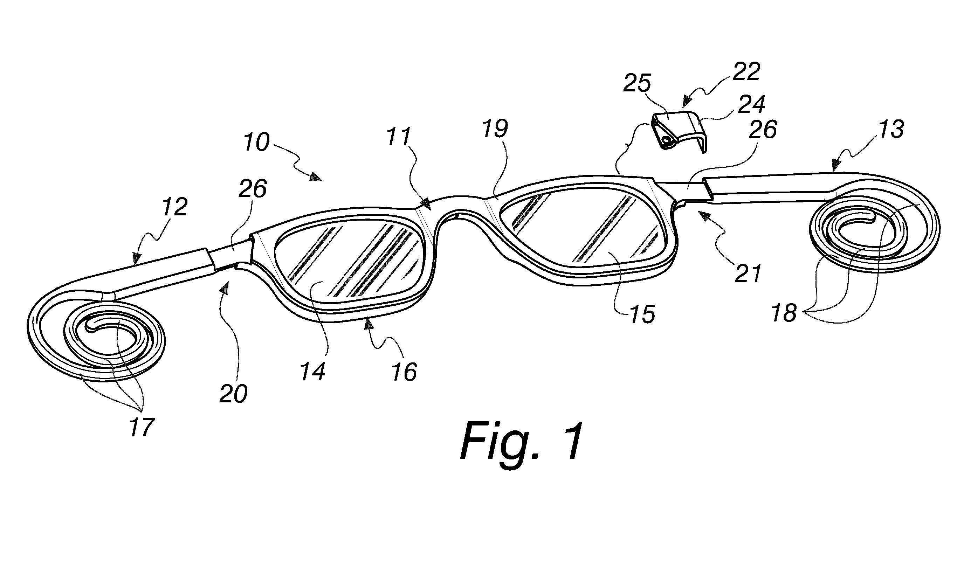

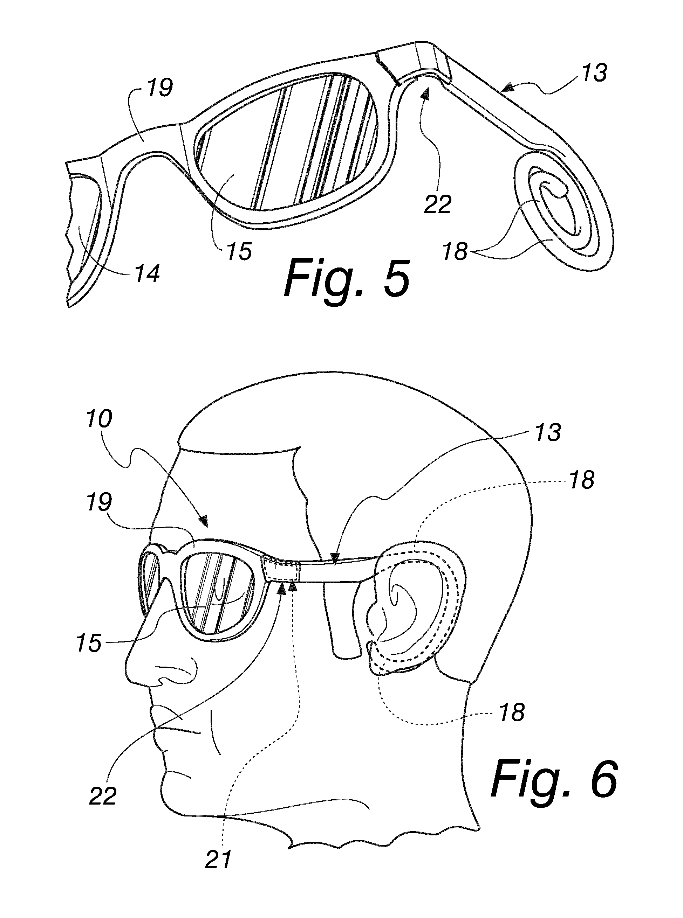

The temples 12 and 13 each have, in the inactive configuration, as shown in Figure 1, a tail portion 17 and 18 which is shaped like a curl or a spiral and is preset to be partially extended in the configuration for use, as shown in Figure 6.

The single body 16 is made, for example, of silicone rubber.

The frame 11 comprises a front part 19, the temples 12, 13 and corresponding connecting portions 20, 21 between the front part 19 and the temples 12, 13.

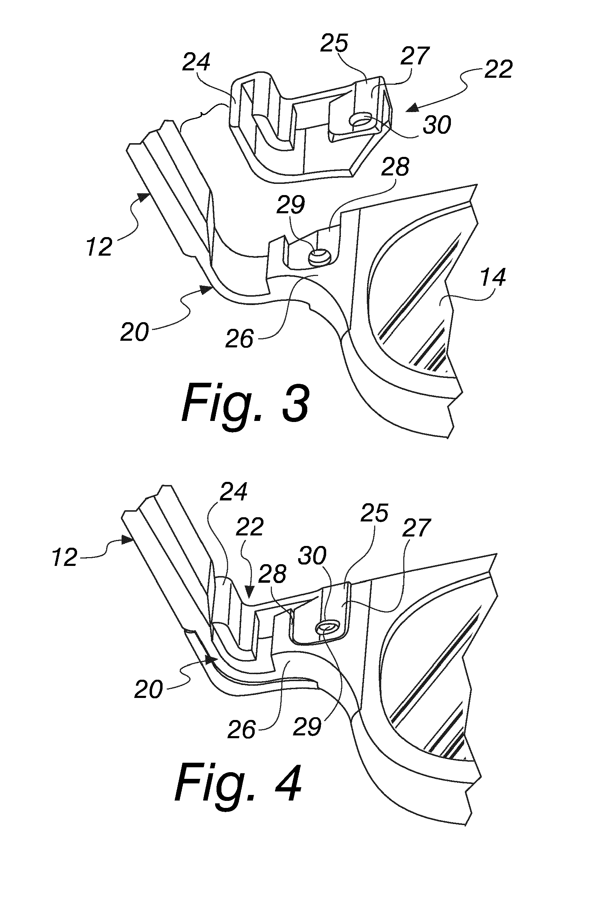

The eyeglasses 10 comprise two auxiliary angular elements, of which only one is shown for the sake of simplicity and is designated with the reference numeral 22, it being understood that the other one is identical and mirror-symmetrical, each one of which is configured for coupling to a corresponding one of the connecting portions 20 and 21 which is folded in a configuration for use, as shown in Figures 3 and 4.

Each one of the auxiliary angular elements 22 comprises an L-shaped portion 24 for maintaining the bent position for the corresponding connecting portion 20, 21 and a fork-like portion 25 for mating with a corresponding complementarily shaped part 26 of the connecting portion 20, 21.

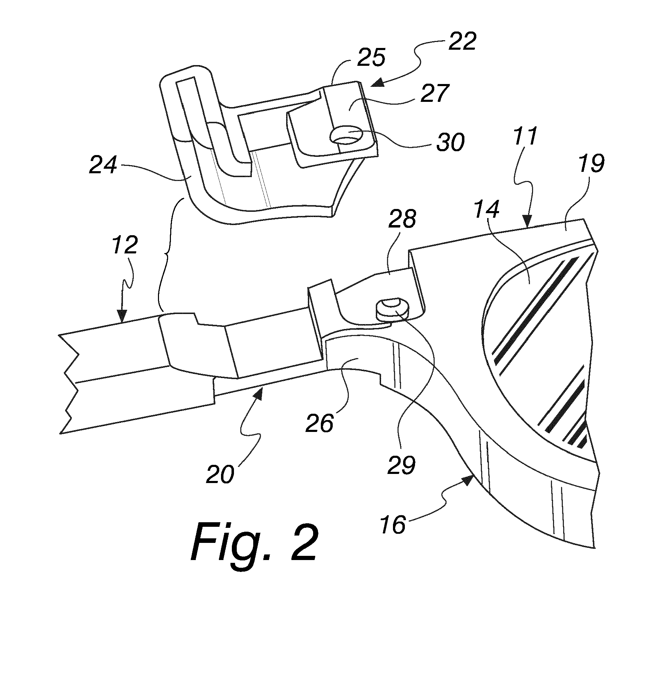

The fork-like portion 25 comprises a flat tab 27 which is adapted to be inserted in a corresponding seat 28 which is defined on said connecting portion 20, 21, in the seat 28 there being an extraction-preventing protrusion 29 for engagement with a corresponding hole 30 defined on the flat tab 27, as can clearly be seen in Figures 2, 3 and 4.

Each one of the auxiliary angular elements 22 is made of rigid or semirigid plastic material.

The auxiliary angular elements 22, mounted on the respective connecting portions 20 and 21, cooperate in retaining the same corresponding connecting portion 20 and 21 in the folded, or curved, configuration, as can clearly be seen in Figure 4, so that when the eyeglasses 10 are worn their shape is more composed and similar to traditional eyeglasses.

The curl-shaped tail portions 17 and 18 of the temples 12 and 13 are adapted to be partially unwound, or extended, in the configuration for use, with the end part tending to remain bent and follow the rear profile of the ear of the user, hooking around it.

The eyeglasses 10 according to the invention, being made entirely of silicone rubber, lenses and temples included, can be folded on themselves multiple times without risk of damage, with the consequent possibility of obtaining a folded packing for the eyeglasses 10 which is much greater than with traditional eyeglasses.

The eyeglasses 10 according to the invention, folded, even untidily, can be conveniently placed even in a trouser or shirt pocket without ruining the line, or composure, of the item of clothing and, especially, without compromising the integrity of the eyeglasses 10.

The invention also relates to a method for manufacturing eyeglasses 10 as described above.

Such method is characterized in that the single body 16 comprising the frame 11, the temples 12, 13 and the lenses 14, 15 is obtained by way of a single operation for the injection molding of two-part liquid silicone rubber.

Another method for manufacturing eyeglasses 10 as described above is characterized in that the single body 16 comprising the frame 11, the temples 12, 13 and the lenses 14, 15 is obtained by way of:
- a first operation of injection molding of a first two-part liquid silicone rubber, for example transparent, in order to provide the lenses 14, 15,
- a second operation of injection molding of a second two-part liquid silicone rubber, which is colored or in any case differs in color with respect to the first two-part liquid silicone rubber if the latter is not transparent, in order to provide the frame 11 with the temples 12, 13.

In practice it has been found that the invention fully achieves the intended aim and objects.

Thus with the invention, eyeglasses are provided which can be easily folded to a much smaller space occupation than that obtainable with conventional eyeglasses, thanks to the peculiar elasticity and deformability of the single body made of silicone rubber which comprises the frame, the lenses and the temples.

Furthermore, with the invention, eyeglasses are provided which can be conveniently carried in pockets, including small pockets, and which are always ready for use.

Moreover, with the invention, eyeglasses are provided which are simple and intuitive to use.

Furthermore, with the invention, eyeglasses are provided which can be manufactured in various different shapes and colors according to the tastes and requirements of the maker.

Furthermore, with the invention, a method for manufacturing such eyeglasses according to the invention is provided.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2014A000203 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Eyeglasses with built-in lenses (10), comprising a frame (11) with temples (12, 13) and lenses (14, 15), **characterized in that** said frame (11), said temples (12, 13) and said lenses (14, 15) are constituted by a single body (16) made of elastically deformable plastic material.

2. The eyeglasses according to claim 1, **characterized in that** each one of said temples (12, 13) has, in the inactive configuration, a tail portion (17, 18) which is shaped like a curl or a spiral and is preset to be partially extended in the configuration for use.

3. The eyeglasses according to one or more of the preceding claims, **characterized in that** said single body (16) is made of silicone rubber.

4. The eyeglasses according to one or more of the preceding claims, **characterized in that** said frame comprises a front part (19), said temples (12, 13) and corresponding connecting portions (20, 21) between said front part (19) and said temples (12, 13).

5. The eyeglasses according to one or more of the preceding claims, **characterized in that** it comprises two auxiliary angular elements (22), each one of which is configured for coupling to a corresponding one of said connecting portions (20, 21) which is bent into a configuration for use.

6. The eyeglasses according to one or more of the preceding claims, **characterized in that** each one of said auxiliary angular elements (22, 23) comprises an L-shaped portion (24) for maintaining the bent position for the corresponding connecting portion (20, 21) and a fork-like portion (25) for mating with a corresponding complementarily shaped part (26) of said connecting portion (20, 21).

7. The eyeglasses according to claim 6, **characterized in that** said fork-like portion (25) comprises a flat tab (27) which is adapted to be inserted in a corresponding seat (28) which is defined on said connecting portion (20, 21), in said seat (28) there being an extraction-preventing protrusion (29) for engagement with a corresponding hole (30) defined on said flat tab (27).

8. The eyeglasses according to claim 7, **characterized in that** each one of said auxiliary angular elements (22) is made of rigid or semirigid plastic material.

9. A method for manufacturing eyeglasses according to one or more of the preceding claims, **characterized in that** said single body (16) comprising the frame (11), the temples (12, 13) and the lenses (14, 15) is obtained by way of a single operation for the injection molding of two-part liquid silicone rubber.

10. The method for manufacturing eyeglasses according to claims 1 to 8, **characterized in that** said single body (16) comprising the frame (11), the temples (12, 13) and the lenses (14, 15) is obtained by way of:
- a first operation of injection molding of a first two-part liquid silicone rubber in order to provide said lenses (14, 15),
- a second operation of injection molding of a second two-part liquid silicone rubber, which differs in color with respect to the first two-part liquid silicone rubber, in order to provide said frame (11) with temples (12, 13).
